# EUROPEAN PATENT APPLICATION

(11) **EP 4 629 218 A1**
(43) Date of publication of application: **08.10.2025**
(21) Application number: 24168159.2
(22) Date of filing: 02.04.2024
(51) Int. Cl.: G09F 15/00

(54) **IMPROVED MODULAR DISPLAY WALL**

(71) Applicant: Ledblox BV, 2640 Mortsel (BE)
(72) Inventor: VAN BEIRENDONCK, Wouter, 2640 Mortsel (BE)
(74) Representative: IPLodge bv

(57) **Abstract**

The present invention concerns a display module for a modular display wall comprising a plurality of frame modules serving as basic units, wherein the display module comprises a display frame, a signal receiver, and at least one displaying screen attached on a front side of the display, whereby the displaying screen comprises a through-hole for allowing a side protrusion of another module of the display wall to pass through the displaying screen.

## Description

### Technical field

The disclosed invention relates to the field of modular exhibition stands, in particular to a display module for a temporary exhibition stand.

### Background

A modular temporary exhibition stand is a temporary building which consists of several walls and can be constructed or dismounted and removed rapidly when needed, wherein the main components have a modular design and are usually frame modules provided with installation holes. A frame module consists in the first place of a number of profiles and frame modules are assembled or disassembled through bolts and end fittings. The frame modules can be assembled flexibly and can be adjusted according to requirements defined in the design of the exhibition stand. After installation, display materials, panels, canvases and suchlike are assembled on the several walls of the exhibition stand in order to obtain the ideal layout.

In some cases, display screens are desired on the surface of one or more of the walls of the exhibition stand to improve the esthetic and visual effect of the exhibition stand. The display screens used in the exhibition stand should meet the requirements of a modular design.

Furthermore, the modules should have flexibility with respect to how they are interconnected to each other and how they are electronically connected to a controlling server.

### Summary of the invention

The present invention concerns a display module for a modular display wall comprising a plurality of frame modules serving as basic units, wherein the display module comprises a display frame, a signal receiver, and at least one displaying screen attached on a front side of the display frame, whereby the displaying screen comprises a through-hole for allowing a side protrusion of another module of the display wall to pass through the displaying screen. Preferably, the through-hole comprise the shape of a slit. The present invention also concerns a kit comprising a display module according to the present invention, and at least one other module which comprises a side protrusion which is arranged to fit into and pass through the through-hole of the display module. Further, the present invention concerns also a modular display wall comprising a set of display modules according to the present invention.

### Overview of the figures

Figures 1 to 7 illustrate embodiments of the present invention.
Figure 8 illustrates how the display module of the present invention can be built into a modular display wall with frame modules in accordance with the present invention.

### Detailed description of the invention

The current invention will be illustrated with reference to the figures.

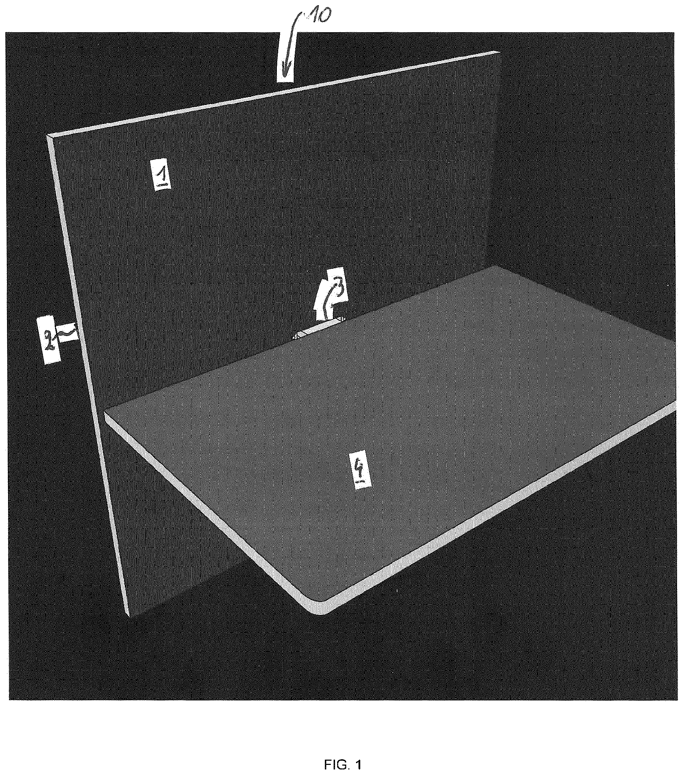

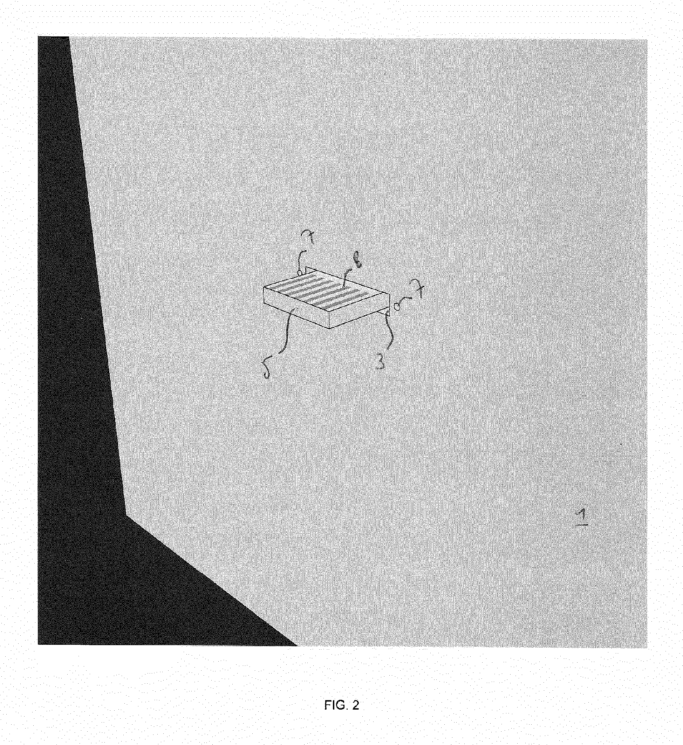

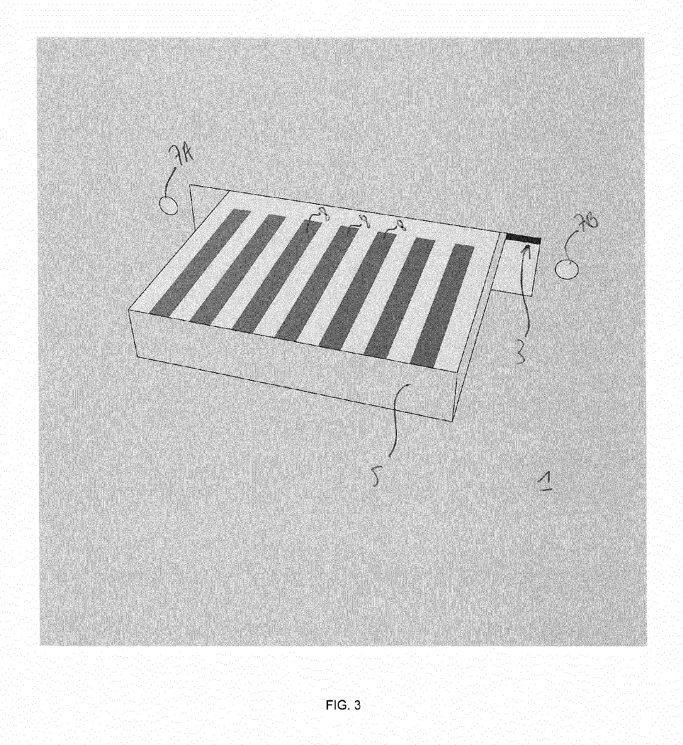

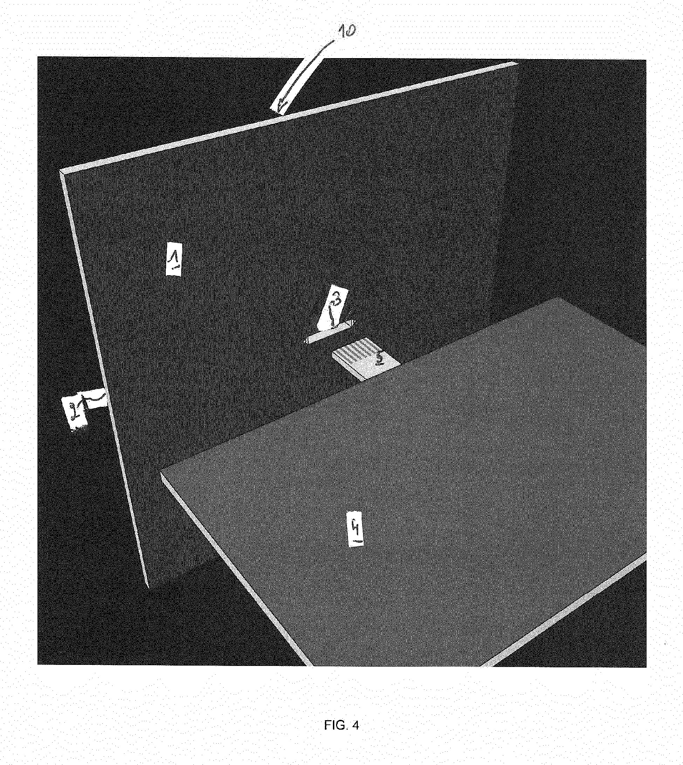

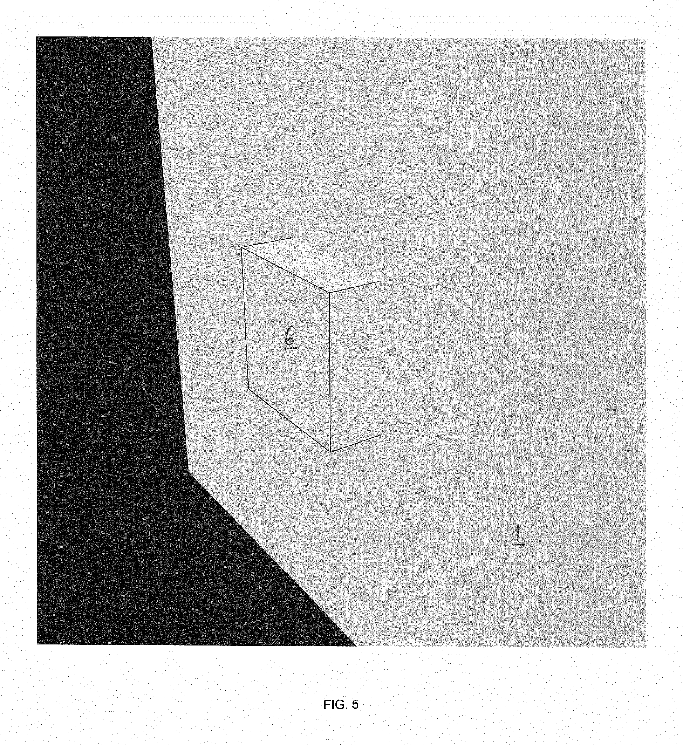

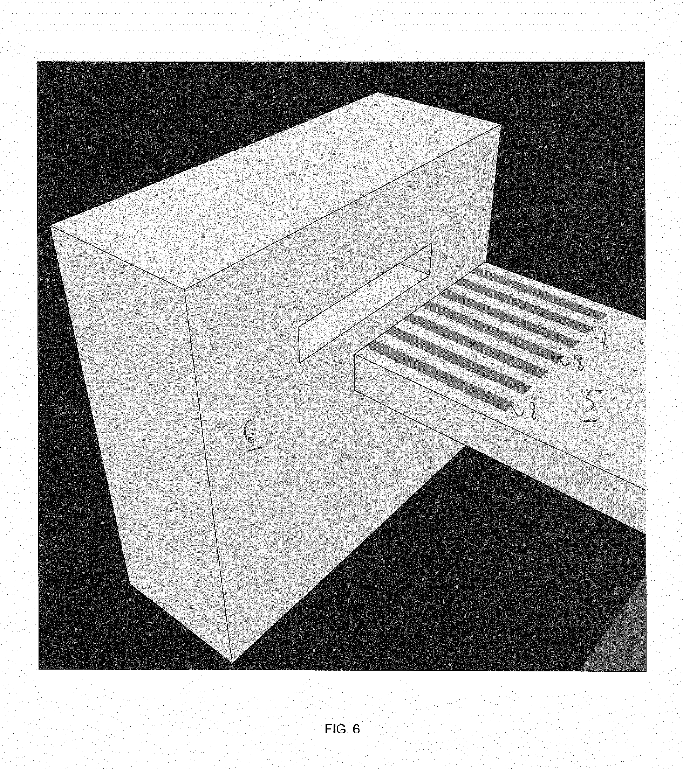

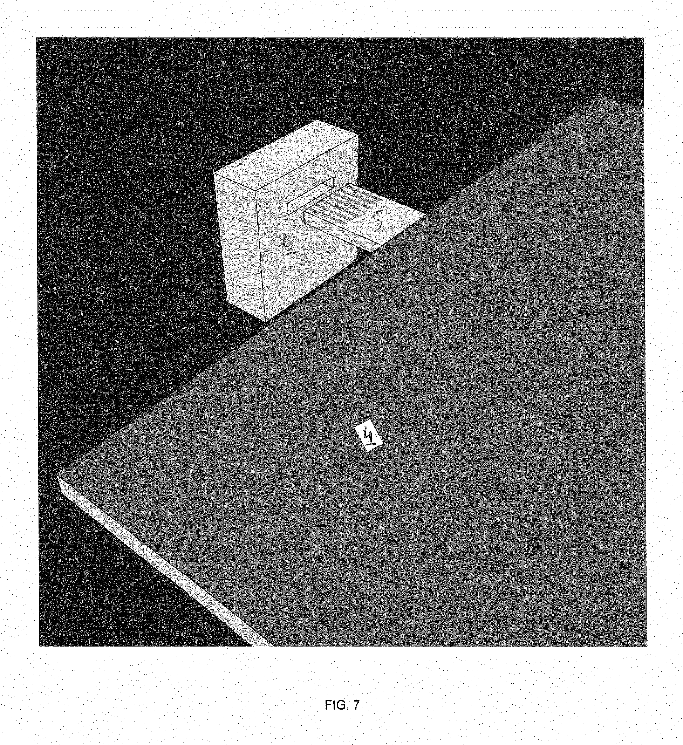

Figures 1-7 show an embodiment of a display module (1) according to the present invention. The display module (10) comprises a display frame (2) which basically defines the outer contour of the display module, and a signal receiver, which can preferably be mounted on the back side of the display module. The display screen (1) is attached on the front side of the display module and the display frame. The display screen comprises a through-hole (3), in the present case in the form of a slit. In accordance with an embodiment of the invention, another module (4) is provided. The other module can preferably be a display module or a frame module. The other module comprises a side protrusion (5) which can be passed through the through hole.

A set of attachment holes (7), e.g. screw holes or bolting holes, are preferably provided in the display module and/or the display screen thereof. The attachment holes (7) can be used to attach the other module (4) to the display module (1).

In an embodiment, the display screen comprises a digital display board, preferably a printed circuit board (pcb). Preferably, the through-hole passes through the digital display board. In a preferred embodiment, the digital display board comprises a structural strength which is at least large enough to hold the other module (4) in position when the other module is attached to the digital display board, preferably in a position perpendicular to the position of the display module. Hereby, the display module can preferably be positioned vertically and the other module can preferably be positioned horizontally.

In a preferred embodiment, the other module (4) comprises an electrical or electronical device. This is the case when the other module (4) is a display module comprising a display frame, a display screen and a signal receiver. In a very preferred embodiment, the side protrusion (5) comprises a set of electrically conducting connectors (8), such as cables, wires or conducting strips. The electrically conducting connectors (8) can be used to drive the electrical or electronic device on the other module, such as the signal receiver in case the other module is a display module. Note that the other module can also be a display module according to the present invention, comprising a through-hole.

In an embodiment, the display module and/orthe kit according to the present invention, comprises an attachment device (6) configured to attach to the side protrusion (5) and optionally to connect to the electrically conducting connectors thereon. Optionally the attachment device is configured to be attached to the side protrusion in such a way as to hold the other module in position.

The display module can be used in a temporary modular exhibition stand in order to enable the modular installation of a display screen in a temporary exhibition stand.

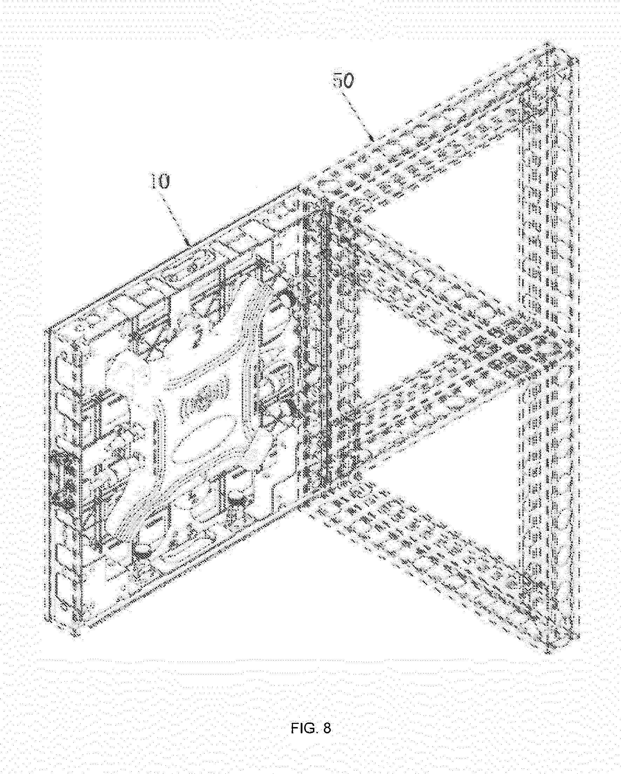

Such a display module for a temporary exhibition stand comprising basic units, preferably frame modules, may comprise one or more display screens such as LED screens, LCD screens, OLED screens or any combination thereof. The display module further comprises a display frame and a signal receiver. Preferably, the display frame comprises a front face, a first lateral face, a second lateral face, a third lateral face and a fourth lateral face, wherein the first lateral face is connected with the second and the fourth lateral face, the second lateral face is connected with the first and the third lateral face, the third lateral face is connected with the second and fourth lateral face and the fourth lateral face is connected with the first and the third lateral face and fixing surfaces are arranged on the display frame. Preferably, a first set installation holes is formed in the lateral faces and a second set installation holes is formed in the fixing surfaces, wherein the one or more display screens are arranged on the front face of the display frame, and the one or more display screens are connected with the signal receiver. An advantage of this invention is that the installation holes of the display module are compatible with the installation holes of the frame modules, which enables a fast and efficient assembly of a display module with a frame module or display modules with fasteners. The installation holes can be shaped differently, preferably circular, and at best, a finishing profile can be fixed on the installation hole. The outline of the display module (10) being attached to a frame module (50) is illustrated in figure 8.

In a preferred embodiment of the invention, a bracket, preferably cross-shaped, is arranged in the center of the display frame, fittings are arranged on the bracket, and the signal receiver is fixed on the bracket through the fittings. The bracket and fittings improve the fixation of the one or more display screens and the signal receiver to the display frame which is a big advantage. There is no screw needed for the fixation. Moreover, the bracket increases the stability and strength of the entire exhibition stand.

In a preferred embodiment of the invention, a plurality of magnets, in particular two, used for positioning the one or more screens are arranged on the front face of the display frame.

A preferred embodiment of the invention comprises a groove used for assembling a back covering, on the inner side of at least one of the lateral faces of the frame module. In particular, this preferred embodiment enables a dynamic and esthetical finish of the exhibition stand. A tendon of a canvas can be applied in the groove to attach the canvas to the display frame.

According to a further preferred embodiment of the invention, a handle used for carrying and for crossing cables is provided in the lateral faces of the display frame. The advantage of this embodiment is that the temporary exhibition stand can be finalized in a dynamic and esthetic manner.

According to a further preferred embodiment of the invention, the number of display screens is one, two, three, four, or more. The LED screens are arranged according to a rectangular grid. This preferred embodiment enables to display moving and dynamic images on the surface of the wall of the exhibition stand. Moreover, the screens can be replaced separately when defect which is a big advantage.

In a preferred embodiment of the invention, fixing surfaces are provided in the four corners of the display frame and a second set of installation holes is formed in the fixing surfaces. An advantage of this embodiment is that the display module can be arranged to another display module or frame mod ule at an angle to obtain a three-dimensional exhibition stand.

A preferred embodiment of the invention comprises hook-and-loop fasteners on the fixing surfaces. A beneficial aspect of this invention is that panels can be attached to the surface of the walls of the exhibition stand to finalize the construction esthetically.

According to a preferred embodiment of the invention, at least one installation hole of the first or second set of installation holes is formed and this installation hole defines a surface, in particular a circle, wherein the distance of the center of gravity of this surface to at least one of the nearby edges of the display frame almost equals half of the depth of the display module, in particular 31 mm.

According to a preferred embodiment of the invention, the length of at least one of the lateral faces of the display frame x is equal to a multitude of 4 times the distance y from the center of gravity of the surface defined by at least one of the installation holes of the first or second set of installation holes, in particular a circle, to at least one of the edges of the display frame. The advantage of this embodiment is that the compatibility with the frame module is enhanced because the same dimensions and ratios are used.

According to a preferred embodiment of the invention, at least one installation hole of the first or second set of installation holes is formed wherein the distance from the center of gravity of the surface defined by this installation hole, in particular a circle, to the nearest shared edge of two adjacent lateral faces almost equals half of the depth of the display module, in particular 31 mm.

In a preferred embodiment of the invention, the first or second set of installation holes comprises at least two installation holes and the distance between the centers of gravity of the surfaces defined by two installation holes of the first or second set of installation holes, in particular circles, is a multitude of the depth of the display module, in particular 62 mm.

In a preferred embodiment of the invention, at least one installation hole of the first or second set of installation holes wherein the center of gravity defined by the surface of this installation hole, in particular a circle, is formed at a distance x to at least one edge of the display frame and wherein the distance x = 31 + 62n with x in millimeters and n is part of the natural numbers.

All of these preferred embodiments have the advantage of enhancing the modularity and versatility, namely the fixation of the display module to another display module or a frame module is possible in different ways and in different dimensions.

According to a preferred embodiment of the invention, the display modules and the frame modules are merged and assembled to each other by connectors, in particular bolts, through installation holes of the first or second set of installation holes of the display module.

According to a preferred embodiment of the invention, the depth of the display module is identical to the depth of the frame module, preferably 62 mm. An advantage of this preferred embodiment is that the display module can be easily and esthetically installed in a construction of frame modules.

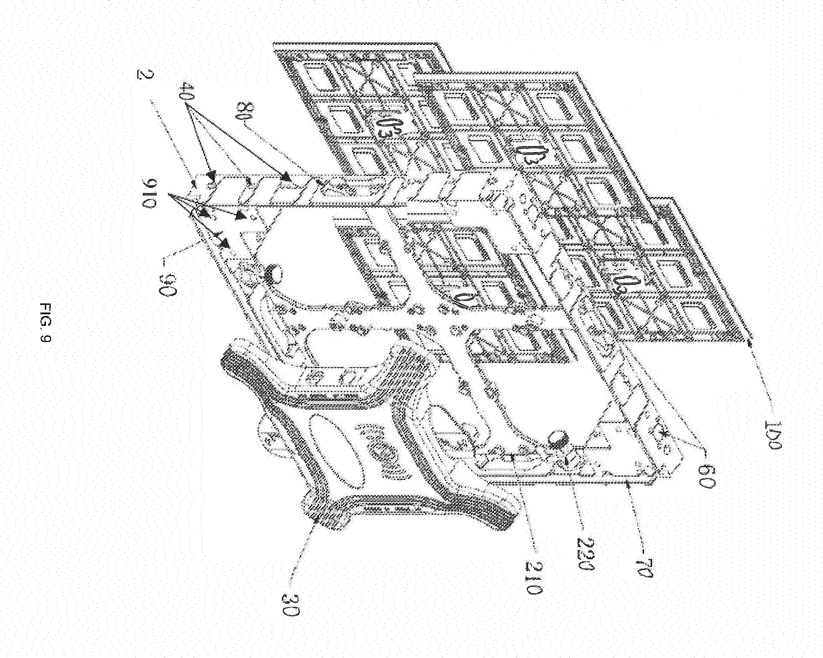

With reference to figures 8 and 9, a display module (10) for a modular temporary exhibition stand comprises a number of display screens (100), a display frame (2) and a signal receiver (30), wherein the display frame (2) is a conventional rectangular frame. The shape of the display frame (2) is not unique and can be adapted, for example according to the shape of the frame module (50), and thereof all the structures fulfilling a modular function can be implemented according to the invention. Moreover the display frame (2) comprises a front face, a first lateral face, a second lateral face, a third lateral face and a fourth lateral face and fixing surfaces (90) are arranged on the display frame. These lateral faces are rectangular in the illustrated embodiment. However, at least one of these lateral faces can be shaped curved or randomly and these faces can be surfaces in a three-dimensional space.

According to an embodiment of the invention, installation holes of the first set installation holes (40) are formed in the lateral faces of the display frame (2), wherein the type of the installation holes (40) is the same as the type of the installation holes of the frame modules (5), which makes the connection between a display module (10) and a frame module (50), as well as a connection between multiple display modules (10) possible in an easy way. The connecting way is similar to the connecting way of frame modules (50), in particular through bolts (220) and nuts. In the embodiment, multiple installation holes of the first set of installation holes (40) are provided. These installation holes are formed at a specifically defined distance from the edges of the display frame to enhance the compatibility with the frame modules (50) and between display modules (10) in all dimensions and to provide more assembling locations. As shown in the drawings 8 and 9, the first installation hole of the first set of installation holes (40) is formed at a distance of 31 mm from the shared edge of two different lateral faces. Moreover, the distance between the installation holes in the embodiment is specifically defined, namely 62 mm. The installation holes are circular and the center of the installation holes is exactly positioned in the middle between the two longest edges of the lateral face, namely at 31 mm of two of the four edges of the latera I face.

In an embodiment, the panels of the four display screens (1) are arranged on the front face, namely the side faced towards the audience, of the display frame (2), in particular in the form of a two by two matrix and all the display screens (1) are connected with the signal receiver (30) on the back face of the display frame (2). The brightness of the display screens in the embodiment can reach between 600 and 12.000 nits, in particular the brightness is around 1.200 nits.

In the embodiment as shown in the drawings, a bracket (210) is provided in the center of the display frame (2). In the embodiment, the bracket (210) is cross-shaped and extends across two lateral faces of the display frame (2), wherein a plurality of circular fittings are arranged on the back face of the bracket (210), and wherein the front face of the signal receiver (30) can be fixed on the bracket (210) through the fittings. Note that the signal receiver (30) can also be connected to another module (4) via the though-hole (3) in the display screen as discussed previously. The fittings are, in their simplest form, mechanical connection points used for connecting elements. In particular, during the connection of elements through the mechanical connection points, screws are not required and the connection process is quick and effective. Moreover, the cross-shaped structure of the bracket supports the display screens separately and enhances the bearing strength of the entire exhibition stand.

In the embodiment as shown in the drawings 8 and 9, a plurality of magnets (60) are further provided on the front face of the display frame (2) used for positioning of the display screens (1). The magnets (60) attract the display screens (1) in order to simplify the positioning and the installation.

To build a temporary exhibition stand, first a design is made wherein the positioning of the display modules (10) and frame modules (50) is defined. During the construction of the exhibition stand, the display modules (10) and frame modules (50) are positioned according the design and the installation holes of the display module are aligned with the corresponding installation holes of the frame modules or other display modules. The positioning of the modules is simplified by magnets on the outside of the lateral faces of the display module (10) or frame module (50). In the embodiment, the bearing strength of the magnets is higher than the mass of the display module (10) which makes it possible to easily build the exhibition stand from the top to the bottom. After positioning, the bolts (220), in particular M8-bolts, sequentially penetrate through the installation holes to complete the connection. After connecting the corresponding positions, the connection of a display module (10) and a frame module (50) or two display modules (10) is completed. At the time of disassembly of the display module (10), the bolts (220), in particular M8-bolts, are loosened sequentially. Since the installation holes in the embodiment are compatible with the installation holes in the frame module (50), the bolts used to make the connection are the same as used for the connection of two frame modules and the assembling process of a display module (10) and a frame module (50) or two display modules (10) is the same as the assembling process of two frame modules (50). No additional components or tools are needed. Consequently, the display module (10) has universal and modular features and can be rapidly assembled and disassembled.

For certain temporary exhibition stands, a display screen with a surface area larger than the surface area of one display module (10) is desired. Multiple display modules (10) can be connected together to further extend the versatility of the display module (10).

In the embodiment a groove, used for mounting a back covering, is provided on the inner side of at least one of the lateral faces of the display frame. The back covering is usually a textile or fabric and is mounted to obtain a n esthetical finish and to hide the cabling. The groove cen be provided in the same manner in the display module as in the frame module wherein the profiles are described in the Belgian patent application with patent number 1020560A3.

In the embodiment, a handle used for carrying and for crossing cables, is provided in the lateral faces of the display frame (2). Preferably, the shape of the handle is based on the shape of an installation hole of the first set of installation holes. Further, a cover clip can be mounted onto the handle (80) and a cover profile can be mounted onto the display frame (2) to achieve a finished side of the display module (10).

In the embodiment, fixing surfaces (90) are provided in the four corners of the display frame (2), and strips of hook-and-loop fasteners are arranged on the fixing surfaces (90). The hook-and-loop fasteners enable an esthetical finishing of the exhibition stand with panels or other profiles.

In the embodiment, multiple installation holes of the second set of installation holes (910) are provided in the fixing surfaces (90). The installation holes are formed at a specific defined distance from the edges of the display frame. In an embodiment of the invention, the installation holes (910) are circular and the centers of the installation holes (910) are at a distance of 31 mm from at least one of the edges of the display frame (2). This second set of installation holes (910) enables the integration of the display module (10) in a three-dimensional exhibition stand.

In the embodiment as shown in the drawings, the depth of the display module (10) is 62 mm, which is equal to the depth of the frame module (05). Consequently, the display module (10) and frame module (50) can be easily connected next to each other. In the embodiment as shown, the display module (10) and frame module (50) have the same projected area and the same shape, which enables substitution of a frame module (50) with a display module (10) or vise versa. Since the depth is small, transportation costs and storage space can be reduced.

Components, such as the display frame (2), the bracket (210), etc. are preferably made of magnesium-aluminum alloy, but can also be made of aluminum-, magnesium- or carbon alloy, so that the display module (10) weighs less than 30 kg per square meter. Although the display module (10) is heavier than the frame module (50), it is still light and handy.

Preferably, the length of at least one of the lateral faces of the display frame x equals a multitude of 4, namely 4; 8; 12; 16; 20; 24; ...; times the distance y of the center of gravity of the surface defined by at least one of the installation holes, in particular a circle, of the first (40) or second set of installation holes (910) to at least one of the edges of the display frame. In the embodiment shown on the drawings, the length of the lateral faces is 496 mm, the middle points of the circular installation holes are formed at a distance 31 mm from at least one of the edges of the display frame and 496 mm equals 16, or 4 times 4, times 31 mm.

In an embodiment, the front face is defined as the surface of the display frame (2) at which the display screens are attached, this is in the preferred embodiment the side faced towards the audience. The faces shown in the drawings, being the front face, the back face and the lateral faces of the display frame (2) are flat or two-dimensional. However, in another embodiment of the invention, these faces can be three-dimensional faces that can be statically formed or dynamically deformed. In particular, it is possible to dynamically deform the whole display module (10).

## Claims

1. A display module for a modular display wall comprising a plurality of frame modules serving as basic units, wherein the display module comprises a display frame, a signal receiver, and at least one displaying screen attached on a front side of the display, whereby the displaying screen comprises a through-hole for allowing a side protrusion of another module of the display wall to pass through the displaying screen.

2. A display module according to claim 1, wherein the through-hole comprise the shape of a slit.

3. A display module according to any of the previous claims, comprising a set of attachment holes provided in the display module and/or the display screen thereof.

4. A display module according to any of the previous claims, wherein the display screen comprises a digital display board, preferably a printed circuit board (pcb) and whereby the through-hole passes through the digital display board, preferably wherein the digital display board comprises a structural strength which is at least large enough to hold another module in position when the other module is attached to the digital display board.

5. A display module according to any of the previous claims, wherein the display module comprises an attachment device configured to attach to the side protrusion of the other module and optionally to connect to electrically conducting connectors thereon.

6. A display module according to any of the previous claims, wherein the display frame comprises a front face, a first lateral face, a second lateral face, a third lateral face and a fourth lateral face, wherein the first lateral face is connected with the second and the fourth lateral face, the second lateral face is connected with the first and the third lateral face, the third lateral face is connected with the second and fourth lateral face and the fourth lateral face is connected with the first and the third lateral face and fixing surfaces are arranged on the display frame, **characterized in that** a first set installation holes is formed in the lateral faces and a second set installation holes is formed in the fixing surfaces, wherein panels of one or more display screens are arranged on the front face of the display frame and the one or more display screens are connected with the signal receiver.

7. A display module according to any of the previous claims, wherein a groove, used for mounting a back covering, is provided on the inner side of at least one of the lateral faces of the display frame.

8. The display module for the modular temporary exhibition stand according to any of the preceding claims, wherein at least one installation hole of the first or second set of installation holes is formed and wherein this installation hole defines a surface, in particular a circle, wherein the distance of the center of gravity of this surface to at least one of the nearby edges of the display frame almost equals half of the depth of the display module, in particular 31 mm.

9. The display module for the modular temporary exhibition stand according to any of the preceding claims, **characterized in that** the first or second set of installation holes comprises at least two installation holes and the distance between the centers of gravity of the surfaces defined by two installation holes of the first or second set of installation holes, in particular circles, is a multitude of the depth of the display module, in particular 62 mm.

10. The display module for the modular temporary exhibition stand according to any of the preceding claims, **characterized in that** at least one installation hole of the first or second set of installation holes wherein the center of gravity defined by the surface of this installation hole, in particular a circle, is formed at a distance x to at least one edge of the display frame and wherein the distance x = 31 + 62n with x in millimeters and wherein n is part of the natural numbers.

11. A kit comprising a display module according to any of the claims 1 to 10, and at least one other module which comprises a side protrusion which is arranged to fit into and pass through the through-hole of the display module.

12. A kit according to claim 11, wherein the other module comprises an electrical or electronical device and wherein the side protrusion comprises a set of electrically conducting connectors.

13. A kit according to any of the claims 11 or 12, wherein the display module comprises an attachment device configured to attach to the side protrusion of the other module and optionally to connect to electrically conducting connectors thereon.

14. A kit according to any of the claims 11 to 13, wherein the other module is a display module according to any of the claims 1 to 10.

15. A modular display wall comprising a set of display modules according to any of the claims 1 to 10 and preferably a set of frame modules.
